**Europäisches Patentamt**

**European Patent Office**

**Office européen des brevets**

(19)

(11) Veröffentlichungsnummer: **0 198 451**
**B1**

(12) # EUROPÄISCHE PATENTSCHRIFT

(45) Veröffentlichungstag der Patentschrift:
**17.05.89**

(51) Int. Cl.⁴: **C02F 3/08**

(21) Anmeldenummer: **86105036.7**

(22) Anmeldetag: **12.04.86**

(54) **Hohlkörper zur biologischen Abwasserreinigung.**

(30) Priorität: **16.04.85 DE 3513602**

(43) Veröffentlichungstag der Anmeldung:
**22.10.86 Patentblatt 86/43**

(45) Bekanntmachung des Hinweises auf die Patenterteilung:
**17.05.89 Patentblatt 89/20**

(84) Benannte Vertragsstaaten:
**AT BE CH DE FR GB IT LI LU NL SE**

(56) Entgegenhaltungen:
**EP-B- 0 030 955**
**DE-A- 1 584 909**
**DE-A- 1 784 892**
**DE-A- 3 016 920**

(73) Patentinhaber: **GRABOWSKI Tropfkörper-Technik
GmbH, Siemensstrasse 4, D-6352 Ober-Mörlen(DE)**

(72) Erfinder: **Grabowski, Gunther, Ing.grad.,
Weidigstrasse 33, D-6306 Langgöns(DE)**

(74) Vertreter: **Schlagwein, Udo, Dipl.-Ing., Anwaltsbüro
Ruppert & Schlagwein Frankfurter Strasse 34,
D-6350 Bad Nauheim(DE)**

## Beschreibung

Die Erfindung betrifft eine Abwasserbehandlungsvorrichtung, welche aus einem Abwasser aufnehmenden Becken und einem Rotor besteht, welcher einen Rohrspiralkörper aufweist und dessen Drehachse so hoch in dem Becken gelagert ist, daß der Rohrspiralkörper mit einer Einlaßöffnung während der Rotation des Rotors auf einem Teilbereich seiner Bewegungsbahn aus dem Abwasser auftaucht. Eine solche Abwasserbehandlungsvorrichtung ist Gegenstand der EP-B1 0 030 955.

Bei der bekannten Abwasserbehandlungsvorrichtung ist die Drehachse des Rotors so weit oberhalb des Flüssigkeitsspiegels im Becken gelagert, daß sein Rohrspiralkörper nur im unteren Bereich in das Abwasser eintaucht. Der dadurch bedingte hohe Energiebedarf zum Fördern des Abwassers im Rohrspiralkörper aus dem Becken heraus nach oben soll dadurch vermindert werden, daß der Rotor nach dieser Schrift zwei gegensinnig gewickelte Rohrspiralkörper aufweist, so daß das Gewicht des abwärtsfließenden Abwassers das Gewicht des aufwärts geförderten Abwassers ausgleicht. Die durch die gegenläufig gekoppelte Rohrspirale bewirkte Aufhebung des Drehmomentes erbringt jedoch nur vordergründig eine Energieeinsparung. Da der größte Teil des Rotors außerhalb des Wassers liegt, treten enorme Lagerdrücke auf, die sich in einem erhöhten Kraftbedarf für den Antrieb des Rotors niederschlagen. Die spezifische Stromaufnahme, ausgedrückt in Watt/m² installierter Trägerfläche, beläuft sich den Angaben zufolge auf 0,92 W/m².

Ein weiterer Nachteil der vorbekannten Abwasserbehandlungsvorrichtung liegt darin, daß in ihrem Rotor sehr wenig Wasser und viel Luft enthalten ist. Deshalb vermag eine solche Vorrichtung nur geringe Abwassermengen durchzusetzen.

Zusätztlich hat die Vorrichtung nach der EP-B1 0 030 955 den Nachteil, daß der größte Teil der Außenfläche des Rotors niemals in das Abwasser eintaucht. Deshalb kann nur ein sehr geringer Bereich der Außenfläche des Rotors zum Aufwuchs sessiler Mikroorganismen genutzt werden.

Ein Tauchkörper, der weitgehend in das Abwasser eingetaucht ist und somit günstige Voraussetzungen für einen größtmöglichen Kontakt zwischen festsitzender Biomasse und dem umgebenden Abwasser schafft, ist in der Offenlegungsschrift DE 3 324 853 bekanntgemacht worden. Der Tauchkörper, der im wesentlichen aus einer gelochten Trommel besteht, in die Füllkörper eingebracht sind, ist auf seiner Außenseite derart profiliert, daß bei ausreichender Umdrehungsgeschwindigkeit Luftblasen in das Abwasserbecken eingetragen werden und in der Umgebung des Tauchkörpers ein mit Sauerstoff angereichertes Abwasser erzeugt wird. Es handelt sich hierbei also in erster Linie um ein Belüftungsaggregat mit einem nachgeordneten Tauchkörperelement. Trotz der für den Sauerstoffeintrag erforderlich hohen Umdrehungsgeschwindigkeit der Trommel ist aber ein gezielter Abwasseraustausch in dem mit Füllkörpern gefüllten Innenraum der Trommel nicht gewährleistet.

Gemäß der DE-A1 3 016 920 ist es bei Abwasserbehandlungsvorrichtungen auch schon bekannt, Tauchtropfkörper-Walzen unterschiedlich weit in ein Abwasserbecken eintauchen zu lassen. Die Walzen nach dieser Schrift weisen jedoch keine Rohrspiralkörper auf. Der Sinn des unterschiedlich weiten Eintauchens liegt gemäß der DE-A1 3 016 920 darin, die den Luftsauerstoff aufnehmenden Bereiche der Walzen zu verändern, so daß unterschiedlich viel Sauerstoff aufgenommen wird. Mit weit aus dem Abwasser ragenden Walzen wird organischer Kohlenstoff abgebaut. Die tiefer eintauchenden Walzen dienen der Nitrifikation und die ganz eingetauchten Walzen der Denitrifikation.

Der Erfindung liegt die Aufgabe zugrunde, eine Abwasserbehandlungsvorrichtung der eingangs genannten Art zu entwickeln, welche bei möglichst geringem Energiebedarf einen großen Durchsatz aufweist und die einen möglichst hohen Wirkungsgrad hat.

Diese Aufgabe wird erfindungsgemäß dadurch gelöst, daß der Rotor in einem trommelartigen Käfig eine Vielzahl von in ihm eingespannten, nebeneinanderliegenden, gleichsinnig gewickelten Rohrspiralkörpern aufweist und durch einen Antrieb gegensinnig zu der Spiralwicklung antreibbar ist und daß die Drehachse des Rotors so weit unterhalb der Wasserlinie im Becken angeordnet ist, daß nur die äußeren Spiralgänge aus dem Abwasser auftauchen.

Ein gemäß der Erfindung hergestellter Hohlkörper erfüllt trotz seines einfachen Aufbaues in hervorragender Weise die an Tauchkörper gestellten Aufgaben. Sowohl Abwasser als auch Luft werden in gleichmäßiger Folge an den auf den Rohrinnenflächen sitzenden Mikroorganismen zwangsweise vorbeigeführt. Die bei einem Umlauf im äußeren Spiralgang eingeschlossene Luftmenge wird in leicht komprimierter Form aus dem innenliegenden Rohrspiralende herausgedrückt, während das im innersten Spiralgang zwischen zwei Luftblasen befindliche Wasservolumen der Wasseraufnahmemenge im äußeren Spiralgang je Umlauf entspricht. Die aus dem inneren Rohrende austretenden Luftblasen steigen in den Zwischenräumen zwischen den einzelnen Rohrspiralen wieder nach oben aus. Dieser Vorgang wird dadurch erleichtert, daß profilierte Wellrohre für die Rohrspirale verwendet werden, womit die Ausbildung der Rohrzwischenräume zu geschlossenen Kanälen vermieden wird. Da die aufsteigenden Luftblasen einen Abwasseraustausch zwischen den Rohren bewirken, stehen auch die äußeren Rohrwandflächen vollständig für die Besiedelung mit Mikroorganismen zur Verfügung. Damit ist eine Nutzung aller Hohlkörperflächen unter weitgehend gleichen Belastungszuständen gegeben. Ein Teil des am inneren Rohrende ausströmenden, gereinigten Abwassers kann durch den freien Innenraum in axialer Richtung abströmen. Der Energieaufwand zur Drehung der Trommel wird bestimmt durch die Auftriebskraft der eingeschlossenen Luftblasen und ihrer Auslenkung von der senkrechten Spiralmittellinie. Durch unterschiedliche Verlagerungen nach links und rechts von der mittigen Lotrechten heben sich die Drehmomente weitgehend gegenseitig auf. Das Restdrehmoment durch außermittigen Blaseneinschluß ist jedoch nicht größer als das Gewicht des im äußeren Spiralgang über die Wasserspiegellinie herausgehobenen Wasserkörpers und seinem seitlichen Schwerpunktsabstand von der senkrechten Spiralmittellinie. Da das Volumen dieses Wasserkörpers nur einen Bruchteil des insgesamt im Spiralkörper eingeschlossenen Luftvolumens ausmacht und der Schwerpunktsabstand kleiner als der halbe Trommelradius ist, erfordert der erfindungsgemäße Hohlkörper ein sehr geringes Antriebsmoment. Nach vorliegenden Untersuchungen beträgt der spezifische Energiebedarf weniger als 0,1 Watt pro m² installierter Besiedelungsfläche und liegt damit erheblich unter den Werten herkömmlicher Tauchkörpersysteme.

Ein besonderer Vorteil der Erfindung ist darin zu sehen, daß der Hohlkörper bei der Behandlung mechanisch vorgereinigten Abwassers keiner Verstopfung oder bereichsweisen Verschlammung unterliegen kann, da der Rohrkanal stets gleichen Querschnitt hat und unter gleichförmigem Druck von Abwasser und Luft durchströmt wird. Auch in den äußeren Zwischenräumen zwischen den Rohrspiralen ist durch die von aufsteigenden Luftblasen erzeugte Turbulenz eine Schlammablagerung ausgeschlossen. Daher eignet sich der Hohlkörper vorzüglich für den Einsatz in schlammhaltigem Abwasser, z.B. in mit Druckluft belüfteten Belebtschlamm- oder Teichanlagen.

In einer weiteren Ausführung ist vorgesehen, mehrgängige Rohrspiralen nebeneinander auf einer Trommel anzuordnen, wodurch bei gleichem Trommeldurchmesser und gleicher Drehgeschwindigkeit die Aufenthaltszeit von Abwasser und Luftblase im Rohrkörper verringert und die Austauschhäufigkeit erhöht wird.

Eine andere Ausführung stellt die aufgelöste Anordnung der Rohrspiralen auf einer Trommel dar, wobei durch geeignete Abstandshalter die Rohrspiralkörper zueinander einen größeren Zwischenraum aufweisen. Ein derartig ausgebildeter Hohlkörper behindert bei Einsatz in einem Becken mit Zwangsumwälzung des Abwassers nur unwesentlich die gerichtete Wasserströmung.

Die Erfindung wird nun anhand eines Ausführungsbeispiels in der Zeichnung erläutert.

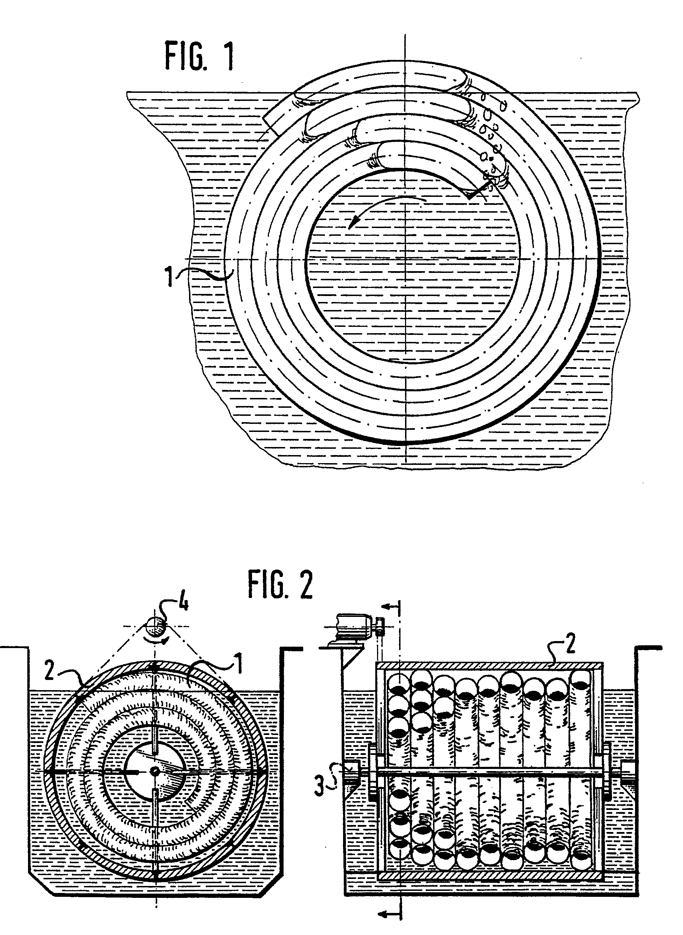

Fig. 1 zeigt einen einzelnen Rohrspiralkörper 1, dessen äußerer Spiralgang aus der dargestellten Wasserspiegellinie herausreicht.

In Fig. 2 ist in Vorder- und Seitenansicht das Schnittbild eines trommelartigen Käfigs 2 mit einer Vielzahl von eingespannten Spiralrohrkörpern 1 dargestellt. Der Käfig 2, bestehend aus einer Profilstahlkonstruktion, ist drehbar auf einer unter Wasser gelagerten Drehachse 3 angeordnet und wird durch den außenliegenden Antrieb 4 in Drehung versetzt.

Bei zur Wicklung des Rohrspiralkörpers 1 gegenläufiger Drehung nimmt das auftauchende Ende jedes Rohrkörpers 1 Luft auf, die bei fortschreitender Drehung durch Wiedereintauchen in das Abwasser als Blase im oberen Rohrbogen eingeschlossen wird. Das durch die Auftriebskraft hervorgerufene Beharrungsvermögen der Luftblase im oberen Scheitelbereich der Rohrkrümmung bewegt diese bei fortlaufender Drehung der Spirale in Richtung des Spiralmittelpunktes nach unten. Am Ende des letzten Spiralganges tritt die Luftblase aus und steigt außerhalb der Spirale wieder nach oben. Da bei diesem Ablauf die im Rohr befindliche Flüssigkeit von der Luftblase verdrängt bzw. hinter der Luftblase angesaugt wird, wird ein ständiger Abwasserdurchfluß durch den Rohrspiralkörper 1 erzeugt, der die an der Rohrwandung anhaftende Biomasse mit Nährstoffen aus dem Abwasser versorgt.

Das erforderliche Drehmoment zum Antrieb der Trommel ergibt sich aus der Summe der Blasenauftriebskräfte und ihrer geringfügigen Auslenkung von der senkrechten Spiralmittellinie. Bei niedrigstem Energieaufwand ist durch den erfindungsmäßigen Hohlkörper nicht nur ein ständiger Kontakt der sessilen Mikroorganismen mit dem Abwasser bei zwangsweiser und gleichförmiger Grenzflächenerneuerung gegeben, sondern auch eine hohe Sauerstoffausnutzung der in das Abwasser eingebrachten Luft.

## Patentansprüche

1. Abwasserbehandlungsvorrichtung, welche aus einem Abwasser aufnehmenden Becken und einem Rotor besteht, welcher einen Rohrspiralkörper aufweist und dessen Drehachse so hoch in dem Becken gelagert ist, daß der Rohrspiralkörper mit einer Einlaßöffnung während der Rotation des Rotors auf einem Teilbereich seiner Bewegungsbahn aus dem Abwasser auftaucht, dadurch gekennzeichnet, daß der Rotor in einem trommelartigen Käfig eine Vielzahl von in ihn eingespannten, nebeneinanderliegenden, gleichsinnig gewickelten Rohrspiralkörpern (1) aufweist und durch einen Antrieb gegensinnig zu der Spiralwicklung antreibbar ist und daß die Drehachse des Rotors so weit unterhalb der Wasserlinie im Becken angeordnet ist, daß nur die äußeren Spiralgänge aus dem Abwasser auftauchen.

2. Abwasserbehandlungsvorrichtung nach Anspruch 1, dadurch gekennzeichnet, daß die Rohrspiralkörper (1) aus mehrgängigen Wicklungen gebildet sind.

3. Abwasserbehandlungsvorrichtung nach den Ansprüchen 1 oder 2, dadurch gekennzeichnet, daß zwischen den Rohrspiralkörpern (1) zur Erzeugung eines größeren Zwischenraumes Abstandshalter vorgesehen sind.

## Claims

1. Element for biological waste water treatment, consisting of a pool for containing the waste water and a rotor, the rotor having a tubular spiral body, the rotor's axis of rotation being located at such a height in the pool that the tubular spiral body during rotation of the rotor emerges, on a section of its path of travel, out of the waste water with an inlet, wherein the rotor has a plurality of fixed, adjacent, tubular spiral bodies (1) each wound in the same direction of rotation in a drum-shaped cage and by means of a motor which is driven in the opposite direction to the spiral winding and wherein the axis of rotation of the rotor is located so far beneath the water line in the pool that only the outer spiral passages emerge out of the waste water.

2. Element for biological waste water treatment according to claim 1, wherein the tubular spiral bodies (1) are made up of multi-start windings.

3. Element for biological waste water treatment according to claims 1 or 2, wherein between the tubular spiral bodies (1) spacers are provided for producing a greater amount of space.

**Revendications**

1. Dispositif pour le traitement d'eau usagée, se composant d'un réceptacle recevant l'eau usagée et un rotor, qui comporte un corps tubulaire en spirale et dont l'axe de rotation est logé à une hauteur telle dans le réceptacle que le corps tubulaire en spirale dépasse par un orifice d'entrée hors de l'eau usagée sur une partie de son cheminement pendant la rotation du rotor, caractérisé en ce que le rotor comporte dans une cage en forme de tambour une pluralité de corps tubulaires en spirale (1) encastrés dans celle-ci, disposés l'un contre l'autre, s'étendant dans le même sens et qui peuvent être entrainés par un moteur en sens inverse de l'enroulement des spirales et en ce que l'axe de rotation du rotor est disposé suffisamment bas en dessous de la ligne d'eau dans le réceptable pour que seulement les passages spiralés extérieurs émergent de l'eau usagée.

2. Dispositif pour le traitement d'eau usagée, selon la revendication 1, caratérisé en ce que les corps tubulaires en spirale (1) sont formés d'enroulements multiples.

3. Dispositif pour le traitement d'eau usagée, selon les revendications 1 ou 2, caractérisé en ce que entre les corps tubulaires en spirale (1) sont disposées des entretoises pour l'obtention d'un espace intermédiaire plus grand.

# FIG. 1

# FIG. 2